# EUROPÄISCHE PATENTANMELDUNG

(11) **EP 2 899 412 A1**
(43) Veröffentlichungstag der Anmeldung: **29.07.2015**
(21) Anmeldenummer: 14004119.5
(22) Anmeldetag: 05.12.2014
(51) Int. Cl.: F16B 25/00, F16B 37/00

(54) **Vorrichtung mit einer Schraubverbindung für eine Unterkonstruktion, insbesondere einer Balkon- und Terrassenabdeckung**

(30) Priorität: 06.12.2013 DE 202013011000 U
(71) Anmelder: Reif, Ulrich, 72631 Aichtal (DE)
(72) Erfinder: Reif, Ulrich, 72631 Aichtal (DE)
(74) Vertreter: Dosterschill, Peter

(57) **Zusammenfassung**

Die Erfindung betrifft eine Vorrichtung mit einer Schraubverbindung für eine Unterkonstruktion, insbesondere einer Balkon- und Terrassenabdeckung.

Der Vorrichtungskörper (1) besteht aus einem ersten Material, insbesondere aus AlMgSi 0,5, wobei eine Schraube (S) in den Vorrichtungskörper (1) eingeschraubt ist. Die Schraube (S) besteht aus einem zweiten Material, insbesondere aus einsatzgehärtetem Stahl, insbesondere mit einer Zinklamellenbeschichtung.

Die Schraube (S) verdrängt bei dem Einschrauben in den Vorrichtungskörper (1) das erste Material des Vorrichtungskörpers (1) und bildet aus dem verdrängten ersten Material einen Gewindetunnel (GT) im Innenraum des Vorrichtungskörpers (1). Somit weist der Vorrichtungskörper nach dem Einschraubvorgang einen durch die eingeschraubte Schraube gebildeten Gewindetunnel aus dem ersten Material auf. In vorteilhafter Weise werden dabei Metallspäne vermieden; der durch das Einschrauben gebildete Gewindetunnel (GT) verstärkt die Schraubverbindung.

## Beschreibung

Die Erfindung betrifft eine Vorrichtung mit einer Schraubverbindung für eine Unterkonstruktion, insbesondere einer Balkon- und Terrassenabdeckung nach dem Oberbegriff des Anspruchs 1.

Es sind unterschiedliche Vorrichtungen mit einer Schraubverbindung, unter anderem mit selbstschneidenden Schrauben aus DE 30 26 115 A1, DE 10 2010 032 956 A1, DE 20 2011 107 963 A1, DE 10 2012 206 166 A1, DE 78 27 147 U1, DE 17 75 811 A, DE 16 58 783 C, EP 0 049 871 B1, EP 0 522 353 A1, EP 0 816 623 A2 und EP 2 355 275 A2 bekannt.

Beispielsweise werden zwei Bauteile wie beispielsweise Unterkonstruktionsbauteile mittels eines Winkelelements miteinander verbunden, wobei eine erste Wand des Winkelelements mit einem ersten Unterkonstruktionsbauteil verschraubt wird und eine zweite Wand des Winkelelements mit einem zweiten Unterkonstruktionsbauteil ebenfalls verschraubt wird. Dabei werden pro Wand jeweils mindestens zwei Schrauben verwendet, um eine sichere Verbindung von Bauteil und Winkelelement zu gewährleisten. Schrauben lassen sich auf glatten Oberflächen der Unterkonstruktionsbauteile nur mit Aufwand präzise ansetzen. Schrauben, die nicht sofort einziehen, bilden beim Eindrehen Späne. Dies ist mit mehreren Nachteilen verbunden. Zum einen erfordern die Vorgänge des Ansetzens und Eindrehens der Schraube einen vergleichsweise hohen Aufwand und zum anderen sind die gebildeten Späne unerwünschter Abfall, der benachbarte Bauteile beschädigen kann und der zu entsorgen ist.
Ausgehend von diesem Stand der Technik liegt der Erfindung die Aufgabe zugrunde, eine Vorrichtung der eingangs genannten Art anzugeben, die eine einfach durchzuführende Schraubverbindung ermöglicht.

Diese Aufgabe wird durch eine Vorrichtung gelöst, die durch den Schutzanspruch 1 definiert ist.

Vorteilhafte Ausführungsformen der Erfindung sind in den Unteransprüchen definiert.

Die erfindungsgemäße Vorrichtung mit einer Schraubverbindung für eine Unterkonstruktion, die insbesondere für eine Balkon- und Terrassenabdeckung bestimmt ist, besteht aus einem Vorrichtungskörper aus einem ersten Material, wobei eine Schraube in den Vorrichtungskörper eingeschraubt ist. Die Schraube kann ein handelsübliches Produkt sein, sie besteht aus einem zweiten Material und weist einen Schraubkern, eine Schraubspitze und ein oberhalb der Schraubspitze angeordnetes Schraubgewinde auf. Der Vorrichtungskörper weist eine Nut auf, die in der Weise ausgestaltet ist, dass die Schraube bei ihrer Einführung in die Nut bei einem Erstkontakt diese mit ihrem Schraubgewinde berührt, jedoch nicht mit ihrer Schraubspitze. Die Schraube verdrängt bei dem Einschrauben in den Vorrichtungskörper das erste Material des Vorrichtungskörpers und bildet aus dem verdrängten Material einen Gewindetunnel. Somit weist der Vorrichtungskörper nach dem Einschraubvorgang einen durch die eingeschraubte Schraube gebildeten Gewindetunnel aus dem ersten Material auf.

Die Erfindung zeichnet sich durch eine Mehrzahl von Vorteilen aus. Die Schraube lässt sich in einfacher Weise ohne Spezialwerkzeug in den Vorrichtungskörper einschrauben. Weiterhin wird auch der Vorteil erzielt, dass der durch den Einschraubvorgang gebildete Gewindetunnel die Fixierung der Schraube im Vorrichtungskörper verstärkt.

Das Einschrauben erfolgt in einfacher Weise mittels herkömmlicher Werkzeuge und der durch den Einschraubvorgang gebildete Gewindetunnel verstärkt in vorteilhafter Weise die Fixierung der Schraube im Vorrichtungskörper. Die Schraube besteht aus dem ("zweiten") Material, insbesondere aus einsatzgehärtetem Stahl, insbesondere mit einer Zinklamellenbeschichtung. Bei dieser Kombination aus erstem Material des Vorrichtungskörpers und zweitem Material der Schraube entsteht bei dem Einschraubvorgang in vorteilhafter Weise der vorstehend genannte Gewindetunnel, der zur Stabilität der Anordnung beiträgt, jedoch entstehen keine Metallspäne, die Unfälle und Schäden an benachbarten Bauteilen verursachen könnten und zu entsorgen sind. Damit wird der Herstellvorgang zur Herstellung der erfindungsgemäßen Vorrichtung sicherer und einfacher.

Die Nut des Vorrichtungskörpers kann in unterschiedlicher Weise ausgestaltet sein. So kann die Nut beispielsweise V-förmig mit einer ("ersten") Öffnung in der Weise ausgestaltet sein, dass ihr Querschnitt einen Öffnungswinkel A aufweist, wobei die Schraubspitze einen Querschnitt mit einem Winkel B aufweist. Der Winkel B des Querschnitts der Schraubspitze ist maximal in etwa gleich groß wie der Öffnungswinkel B des Querschnitts der Nut.

Anstelle der vorgenannten ("ersten") Öffnung kann die Nut mit einer ("zweiten") Öffnung in der Weise ausgestaltet sein, dass die zweite Öffnung eine Breite hat, die kleiner ist als der Durchmesser des Schraubkerns der Schraube.

Mit der erfindungsgemäßen Vorrichtung wird eine Mehrzahl von Vorteilen erzielt. Die erfindungsgemäße Vorrichtung ermöglicht das Einschrauben einer handelsüblichen Blechschraube, auch ohne Bohrspitze. Diese Schraube lässt sich schnell und präzise ansetzen und zudem auch schnell eindrehen, da die Schraube sofort einzieht. Ein weiterer Vorteil, der mit der erfindungsgemäßen Vorrichtung erzielt wird, besteht darin, dass beim Eindrehen der Schraube keine Späne gebildet werden.

Nachfolgend wird die Erfindung anhand von Ausführungsbeispielen unter Bezug auf die Zeichnungen näher erläutert.

Es zeigen:
- Figur 1: einen Vorrichtungskörper gemäß der Erfindung in Perspektivansicht;
- Figur 2: eine Schraube für den Vorrichtungskörper nach Figur 1;
- Figur 3a: eine erste Ausführungsform des Vorrichtungskörpers mit einer ersten Nut zur Aufnahme der Schraube, wobei die Schraube in einer Position vor ihrer Einführung in die erste Nut dargestellt ist,
- Figur 3b: die erste Ausführung des Vorrichtungskörpers mit der ersten Nut zur Aufnahme der Schraube, wobei die Schraube in der Position ihres Erstkontakts mit der ersten Nut dargestellt ist,
- Figur 4a: eine zweite Ausführungsform des Vorrichtungskörpers mit einer zweiten Nut zur Aufnahme der Schraube, wobei die Schraube in einer Position vor ihrer Einführung in die zweite Nut dargestellt ist,
- Figur 4b: die zweite Ausführung des Vorrichtungskörpers mit der zweiten Nut zur Aufnahme der Schraube, wobei die Schraube in der Position ihres Erstkontakts mit der zweiten Nut dargestellt ist,
- Figur 5: den Vorrichtungskörper mit einer eingeschraubten Schraube und mit dem von der Schraube gebildeten Gewindetunnel,
- Figur 6: unterschiedliche Vorrichtungskörper, die das Einschrauben einer Schraube an unterschiedlichen Orten ermöglichen,
- Figur 7: ein Bauteil, das mit dem Vorrichtungskörper zu verbinden ist; und
- Figur 8: eine Anordnung des Vorrichtungsköpers mit einem schraubverbundenden Bauteil nach Figur 7 und mit mehreren Gewindetunneln.

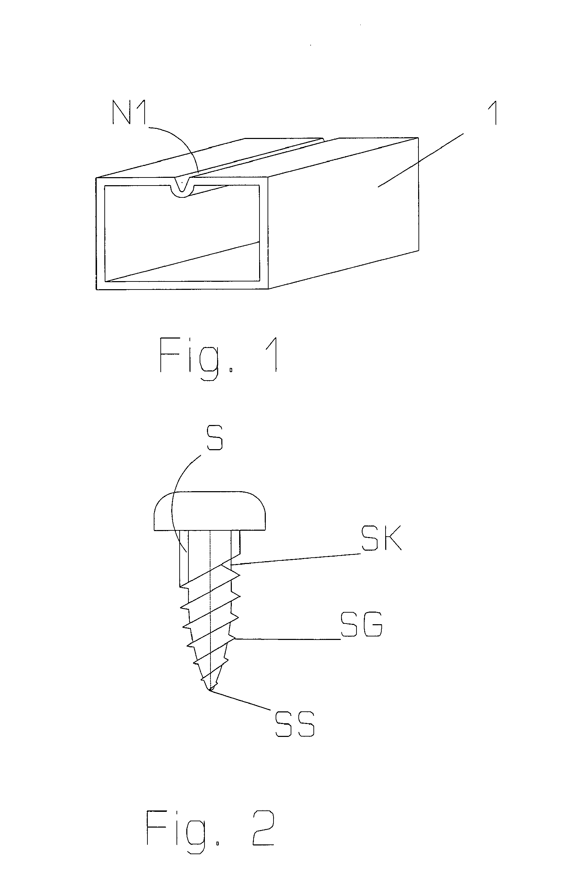

Figur 1 zeigt einen Vorrichtungskörper 1, der beispielsweise Teil einer Unterkonstruktion für Balkon- oder Terrassenabdeckungen ist. Insbesondere ist der Vorrichtungskörper 1 eine Aluminium-Schiene, auf die Dielen/Holzbretter einer Terrassenabdeckung angeordnet werden. Der in Figur 1 dargestellte Vorrichtungskörper 1 weist eine Nut N1 auf. Der Vorrichtungskörper 1 besteht aus einem ersten Material M1, insbesondere aus Aluminium, einer Aluminiumlegierung, insbesondere aus einer aushärtbaren Legierung, und insbesondere aus AIMgSi 0,5.

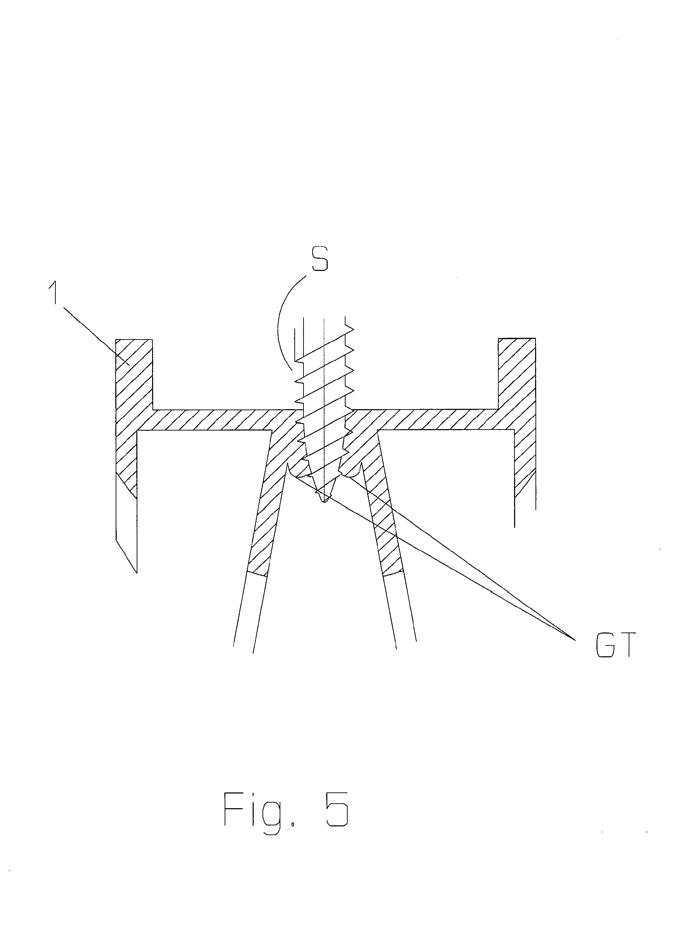

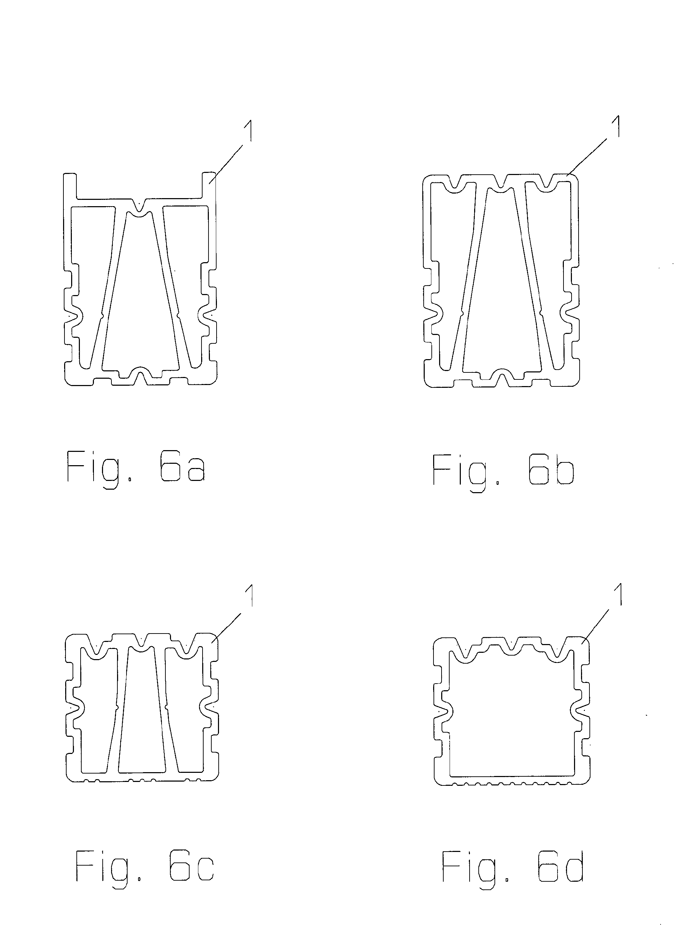

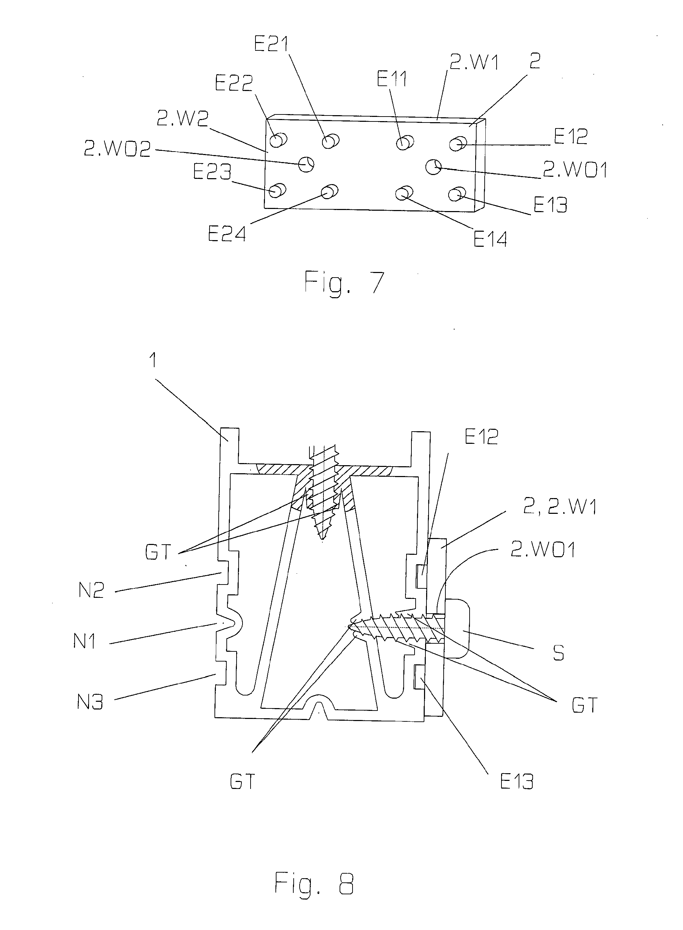

Wie in Figur 8 dargestellt, weisen insbesondere die Seitenwände des Vorrichtungskörpers 1 eine erste Nut N1 auf sowie dazu parallele Nuten N2 und N3, wobei die Nut N2 oberhalb und die Nut N3 unterhalb der ersten Nut N1 verläuft. Die Nuten N1, N2 und N3 erstrecken sich längs des Vorrichtungskörpers 1. Unterschiedliche Vorrichtungskörper 1 sind auch in den Figuren 6a, 6b, 6c, 6d dargestellt. Der in diesen Figuren dargestellte Vorrichtungskörper 1 ermöglicht in den Nuten das Einschrauben einer Schraube, die im Zuge des Einschraubvorgangs jeweils einen Gewindetunnel (GT in Figur 5) bildet.

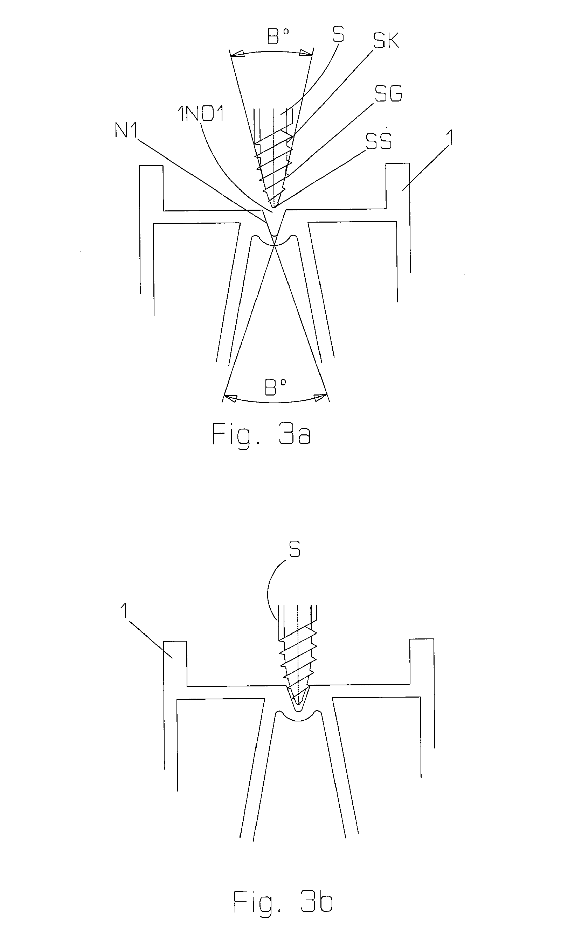

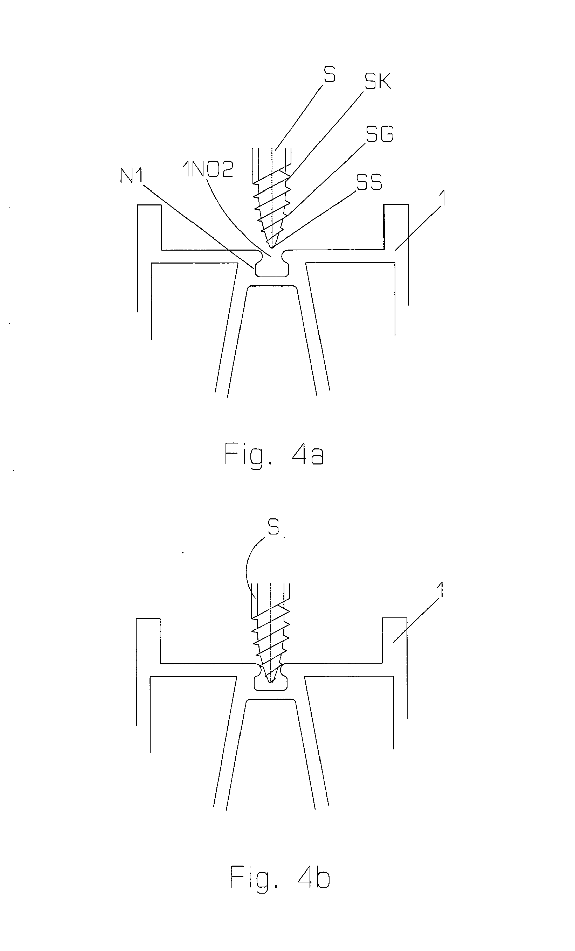

Die Nut N1 kann in unterschiedlicher Weise ausgestaltet sein. Beispiele hierfür sind in den Figuren 3a und 3b bzw. in den Figuren 4a und 4b dargestellt.

Eine Schraube S, die erfindungsgemäß verwendet wird, ist in Figur 2 dargestellt. Die Schraube S hat einen Schraubkern SK, eine Schraubspitze SS und ein oberhalb der Schraubspitze SS angeordnetes Schraubgewinde SG. Die Schraube besteht aus einem zweiten Material M2, insbesondere aus einem einsatzgehärteten Stahl, insbesondere mit einer Zinklamellenbeschichtung.

Die Nut N1 (Figuren 1, 3a, 3b, 8) ist in der Weise ausgestaltet, dass eine Schraube S bei ihrer Einführung in die Nut N1 bei einem Erstkontakt diese ausschließlich mit ihrem Schraubgewinde SG berührt, nicht jedoch mit ihrer Schraubspitze SS.

Der in den Figuren 3a und 3b dargestellte Vorrichtungskörper 1 hat eine Nut N1, die V-förmig ist, und eine ("erste") Öffnung 1NO1, die in der Weise ausgestaltet ist, dass ihr Querschnitt einen Öffnungswinkel A aufweist.
Die Schraube S weist eine Schraubspitze SS auf, deren Querschnitt einen Winkel B hat.
Der Winkel B des Querschnitts der Schraubspitze SS ist maximal in etwa gleich groß wie der vorgenannte Öffnungswinkel A des Querschnitts der Nut N1.

Figur 3a zeigt die Schraube S in einer Position vor ihrer Einführung in die erste Nut, während Figur 3b die Schraube S in der Position ihres Erstkontakts mit der ersten Nut zeigt.

Der in Figur 4a dargestellte Vorrichtungskörper 1 hat eine Nut N1, die anstelle der ersten Öffnung 1N01 eine ("zweite") Öffnung 1NO2 hat. Die ("zweite") Öffnung 1NO2 hat eine Breite, die kleiner ist als der Durchmesser des Schraubkerns SK der Schraube S oder die gleich groß ist wie der der Durchmesser des Schraubkerns SK der Schraube S.
Figur 4a zeigt die Schraube S in einer Position vor ihrer Einführung in die Nut N1, während Figur 4b die Schraube S in der Position ihres Erstkontakts mit der Nut N1 zeigt.

Die in den Figuren 3 und 4 dargestellten Ausführungsformen der Nut N1 sind in der Weise ausgestaltet, dass die Schraube S bei ihrer Einführung in die Nut N1 bei einem Erstkontakt diese mit ihrem Schraubgewinde SG berührt. Die Schraubspitze SS berührt bei diesem Erstkontakt nicht den Boden (Grundfläche) der Nut N1; vielmehr berührt das Schraubgewinde SG die seitlichen Ränder der Nut N1.

Figur 5 zeigt die in den Figuren 3a und 3b dargestellte Schraube S nach Abschluss des Einschraubvorgangs; im Zuge des Einschraubvorgangs wird das ("erste") Material des Vorrichtungskörpers verdrängt und zu einem Gewindetunnel GT geformt. Dieser umgibt die Schraube S, insbesondere den Schraubkern, die Schraubspitze und das oberhalb der Schraubspitze angeordnete Schraubgewinde.

Der in Figur 8 dargestellte Vorrichtungskörper 1 hat zum einen eine Nut N1, in die die Schraube S eingedreht ist. Zum anderen hat der Vorrichtungskörper 1 zwei weitere Nuten N2 und N3. Diese Nuten N2 und N3 nehmen in Figur 7 dargestellte Eingriffselemente E11, E12, E13, E14 auf, die sich in dem Bauteil 2 in dessen erster Wand 2.WO1 auf seiner dem Vorrichtungskörper 1 zugewandten Seite befinden. Beide Nuten N2 und N3 bilden damit Aufnahmeöffnungen für diese Eingriffselemente E11, E12, E13, E14, die erhaben, insbesondere noppenförmig oder als Feder ausgeformt sind.
Figur 8 zeigt zwei Schrauben, eine obere, vertikal angeordnete Schraube S , und eine untere, horizontal angeordnete Schraube S. Die erstgenannte Schraube S hat in der oberen, horizontalen Vorrichtungswand einen Gewindetunnel GT gebildet, wie auch in Figur 5 dargestellt. Die zweitgenannte Schraube S hat zunächst einen ersten Gewindetunnel GT in der seitlichen, rechten Wand gebildet und weiterhin einen zweiten Gewindetunnel GT an der im Inneren des Vorrichtungskörpers schräg verlaufenden Strebe.

Das in Figur 7 dargestellte Bauteil 2 mit zwei Wänden 2.WO1 und 2.WO2 weist zudem zwei Öffnungen 2.WO1 und 2.WO2 für genau jeweils eine Schraube S auf, die der Verbindung des Vorrichtungskörpers 1 mit jeweils einem Bauteil 2 dient.

Die zuvor beschriebenen und in den Figuren dargestellten Anordnungen ermöglichen das Einschrauben einer Blechschraube S, auch ohne Bohrspitze. Die Schraube S lässt sich durch die Ausgestaltung der Nut N1 sowohl schnell und präzise ansetzen als auch schnell eindrehen, da die Schraube S sofort einzieht. Beim Eindrehen der Schraube S werden keine Späne gebildet; vielmehr wird das Material des Vorrichtungskörpers 1 verdrängt, so dass die Schraube S im Vorrichtungskörper 1 das Schraubengewinde selbst formt und am Vorrichtungskörper einen Gewindetunnel bildet.

Die Erfindung betrifft auch das vorstehend beschriebene Bauteil 2.

Der Vorrichtungskörper 1 besteht zum Beispiel aus Aluminium beziehungsweise aus einer Aluminiumlegierung, insbesondere aus einer aushärtbaren Legierung,und insbesondere aus AlMgSi 0,5 ("erstes Material M1").
Die Schraube S besteht zum Beispiel aus einsatzgehärtetem Stahl, insbesondere mit einer Zinklamellenbeschichtung ("zweites Material M2").

Der Vorrichtungskörper 1 und die Schraube 2 können jedoch auch aus anderen Materialien bestehen.

Die erfindungsgemäße Anordnung wird im Unterkonstruktionsbereich von Balkon- und Terrassenabdeckungen angewandt, hierauf ist der Anwendungsbereich der Erfindung jedoch nicht eingeschränkt. Vielmehr lässt sich die Erfindung auch in anderen Bereichen der Befestigungstechnik, zum Beispiel im Bereich der Fassadenabdeckungen.

### Bezugszeichenliste

- 1: Vorrichtungskörper
- M1: Material von 1

- 2: Bauteil
- 2.WO1, 2.WO2: Öffnungen in 2

- S: Schraube
- SK: Schraubkern
- SS: Schraubspitze
- SG: Schraubgewinde
- M2: Material von S

- 1NO1: ("erste") Öffnung in 1
- 1NO2: ("zweite") Öffnung in 1

- E11, ..., E14: Eingriffselemente (2)

- N1: Nut in 1
- N2, N3: Weitere Nuten in 1

- A: Öffnungswinkel des Querschnitts von N1
- B: Winkel des Querschnitts der Schraubspitze SS

## Patentansprüche

1. Vorrichtung mit einer Schraubverbindung für eine Unterkonstruktion, insbesondere einer Balkon- und Terrassenabdeckung, wobei die Vorrichtung einen Vorrichtungskörper (1) aus einem ersten Material (M1) aufweist, wobei eine Schraube (S) aus einem zweiten Material (M2) in den Vorrichtungskörper (1) eingeschraubt ist und die Schraube (S) einen Schraubkern (SK), eine Schraubspitze (SS) und ein oberhalb der Schraubspitze (SS) angeordnetes Schraubgewinde (SG) aufweist,
**dadurch gekennzeichnet,**
- **dass** der Vorrichtungskörper (1) eine Nut (N1) aufweist, die in der Weise ausgestaltet ist, dass die Schraube (S) bei ihrer Einführung in die Nut (N1) bei einem Erstkontakt diese ausschließlich mit ihrem Schraubgewinde (SG) berührt, und
- **dass** der Vorrichtungskörper (1) einen durch die eingeschraubte Schraube (S) gebildeten Gewindetunnel (GT) aus verdrängtem ersten Material (M1) aufweist.

2. Vorrichtung nach Anspruch 1, **dadurch gekennzeichnet,**
- **dass** die Nut (N1) V-förmig mit einer ersten Öffnung (1NO1) in der Weise ausgestaltet ist, dass ihr Querschnitt einen Öffnungswinkel (A) aufweist,
- **dass** die Schraubspitze (SS) einen Querschnitt mit einem Winkel (B) aufweist,
- **dass** der Winkel (B) des Querschnitts der Schraubspitze (SS) maximal in etwa gleich groß ist wie der Öffnungswinkel (A) des Querschnitts der Nut (N1), oder
- **dass** die Nut (N1) mit einer zweiten Öffnung (1N02) in der Weise ausgestaltet ist, dass die zweite Öffnung (1N02) eine Breite hat, die kleiner ist als der Durchmesser des Schraubkerns (SK) oder die gleich groß ist wie der Durchmesser des Schraubkerns.

3. Vorrichtung nach einem der vorstehenden Ansprüche, **dadurch gekennzeichnet,**
- **dass** ein an dem Vorrichtungskörper (1) anliegendes Bauteil (2) eine Öffnung (2.WO1) aufweist, die fluchtend zu der Nut (N1) des Vorrichtungskörpers (1) angeordnet ist, und
- **dass** die Schraube (S) in der Öffnung (2.WO1) des Bauteils (2) angeordnet und in den Vorrichtungskörper (1) eingeschraubt ist, und dass die Schraube (S) im eingeschraubten Zustand den Vorrichtungskörper (1) und das Bauteil (2) fest verbindet.

4. Vorrichtung nach Anspruch 2 und 3, **dadurch gekennzeichnet,**
- **dass** die Öffnung (2.WO1) des Bauteils (2) fluchtend zu der ersten Öffnung (1NO1) oder zu der zweiten Öffnung (1N02) der Nut (N1) des Vorrichtungskörpers (1) angeordnet ist.

5. Vorrichtung nach einem der vorstehenden Ansprüche, **dadurch gekennzeichnet,**
- **dass** das Bauteil (2) auf seiner dem Vorrichtungskörper (1) zugewandten Seite Eingriffselemente (E11, ...) aufweist, die im eingeschraubten Zustand in korrespondierende Aufnahmeöffnungen des Vorrichtungskörpers (1) eingreifen.

6. Vorrichtung nach Anspruch 5, **dadurch gekennzeichnet,**
- **dass** die Aufnahmeöffnungen durch mindestens eine weitere Nut (N2, N3) des Vorrichtungskörpers (1) gebildet sind.

7. Vorrichtung nach einem der vorstehenden Ansprüche 5, **dadurch gekennzeichnet,**
- **dass** das erste Material (M1) Aluminium, eine Aluminiumlegierung, insbesondere eine aushärtbare Legierung, insbesondere AlMgSi 0,5 ist, und
- **dass** das zweite Material (M2) ein einsatzgehärteter Stahl, insbesondere mit einer Zinklamellenbeschichtung, ist.

8. Bauteil (2) für eine Vorrichtung nach einem der Ansprüche 3 bis 7, **dadurch gekennzeichnet,**
- **dass** das Bauteil (2) auf seiner dem Vorrichtungskörper (1) zugewandten Seite Eingriffselemente (E11, ...) aufweist, die im eingeschraubten Zustand in korrespondierende Aufnahmeöffnungen des Vorrichtungskörpers (1) eingreifen.

9. Bauteil (2) nach Anspruch 8, **dadurch gekennzeichnet,**
- **dass** das Bauteil (2) genau eine Öffnung (2.WO1) für genau eine Schraube (S) aufweist.
